# EUROPEAN PATENT SPECIFICATION

(11) **EP 3 515 579 B1**
(45) Date of publication and mention of the grant of the patent: **13.11.2024**
(21) Application number: 17785037.7
(22) Date of filing: 20.09.2017
(51) Int. Cl.: B01D 63/08, B01D 61/36, F28F 13/00, F28F 21/06, F28D 9/00, F28D 21/00

(54) **METHOD FOR PRODUCING A UNIT THROUGH WHICH A FLUID CAN FLOW, HAVING THE FUNCTION OF A HEAT EXCHANGER, A FILTER, OR A COMBINATION OF THE TWO; BASE MODULE WHICH IS PLANAR AND SUITABLE FOR THE METHOD**
VERFAHREN ZUR HERSTELLUNG EINER EINHEIT, DURCH DIE EINE FLÜSSIGKEIT FLIESSEN KANN, MIT DER FUNKTION EINES WÄRMETAUSCHERS, FILTER ODER KOMBINATION AUS DEN BEIDEN, FLACHES UND FÜR DIESES VERFAHREN GEEIGNETES BASISMODUL
PROCÉDÉ DE FABRICATION D'UNE UNITÉ À TRAVERS LAQUELLE UN FLUIDE PEUT S'ÉCOULER, AYANT LA FONCTION D'UN ÉCHANGEUR DE CHALEUR, D'UN FILTRE OU D'UNE COMBINAISON DES DEUX; MODULE DE BASE QUI EST PLANAIRE ET APPROPRIÉ POUR LE PROCÉDÉ

(30) Priority: 20.09.2016 NL 2017501
(43) Date of publication of application: 31.07.2019
(73) Proprietor: RN Holding B.V., 5491 GN Sint-Oedenrode (NL)
(72) Inventor: NIDHANSING, Radjeshkumar, 5491 GN Sint-Oedenrode (NL); LO-A-NJOE, Stuart Ivor Roy, 5492 JN Nijnsel (NL); VERBUNT, Johannes Maria Wilhelmus Antonius, 5491 NN Sint-Oedenrode (NL)
(74) Representative: Patentwerk B.V.
(86) International application number: PCT/NL2017/050621
(87) International publication number: WO 2018/056808

(56) References cited:
- EP-A1- 0 322 604
- EP-A1- 1 925 355
- EP-A1- 1 992 400
- GB-A- 2 034 198
- US-A1- 2015 217 232

## Description

The present invention relates to a method for producing a unit through which a fluid can flow, having the function of a heat exchanger, a filter, or a combination of the two. In addition, the invention relates to a unit through which a fluid can flow, having the function of a heat exchanger, a filter, or a combination of the two.

In the context of the invention, the unit which is produced according to the method comprises the following parts:
- an external housing provided with external entries for a fluid;
- an internal unit through which a fluid can flow and which is placed within the housing.

In principle, the internal unit performs the function of a heat exchanger or filter, but a combination is also possible. For this purpose, a functional film layer is required inside the internal unit which separates two flows from one another within the unit in an impermeable manner in the case of a heat exchanger, and in a semipermeable manner in the case of a filter, respectively.

In terms of the filter function, the invention relates in particular to a filter which can be used to carry out membrane distillation or membrane electrolysis.

The specialist literature describes examples of such units, in which the function of membrane distillation and a heat exchanger are combined.

The principles of this combination, and its advantages, are dealt with extensively in EP1925355. However, this document does not give any detailed instructions about the method for producing such a unit.

In addition, application NL1035752 describes a method for producing the internal unit, based on folding a film layer back and forth. Volume structures or spacers are arranged between the folds in order to create an intermediate space. The sides of the structure are sealed with a resin layer, while the ends of these sides are left free of resin layer so that an inlet and outlet are created. The entire internal unit is subsequently accommodated in a cassette-shaped housing, with the slits and edges between the housing and the internal unit being sealed with a resin layer. The resin layer is usually applied in a deformable, warm state and is also known as a so-called hot melt or melt resin, which cures by cooling.

A few major drawbacks of the method according to NL752 are:
- A cumbersome, laborious method of production, including long drying times for resin layers;
- A large number of slits and gaps which must be sealed with a resin layer, in particular at corners and edges;
- A high risk of leaks when using the produced unit.

EP0322604A1, EP1992400A1, GB2034198A and EP1925355A1 describe further different membrane modules with stacked membrane envelopes or bags.

It is an object of the invention to reduce or even eliminate these problems, so that a simpler method of production is possible, and the produced unit has no or only a very low risk of leaks. This has the additional advantage that units can be produced with a reproducible reliability.

According to a first aspect, to this end the invention provides a unit through which a fluid can flow having the function of a heat exchanger, a filter, or a combination of the two, according to claim 1. The unit according to the invention comprises:
- an external housing provided with external entries for a fluid;
- an internal unit through which a fluid can flow and which is placed within the housing;

wherein the internal unit (30) comprises a number of stacked base modules (1)
   which can be flowed through, wherein each base module is planar and comprises:
   - a planar cover composed of two superposed film layers which are connected to one another at the edges, so that these edges delimit an enclosed interior space;
   - a planar interior structure which can be flowed through and is arranged in the enclosed interior space of the cover;
and wherein the planar cover is configured as a planar basic form, which is provided with planar extensions extending from the basic form, wherein the extensions are provided at opposite sides of the basic form, and the interior space extends into the extensions,
wherein the extensions of the stacked base modules extend through external entries of the external housing, and wherein the extensions have an opened status, in order to form entries into the base modules as a result of which the interior spaces of the base modules can be flowed through via the external entries,
wherein a planar intermediate structure which can be flowed through is placed between at least one pair of adjacent base modules,
and wherein the stacked base modules and intermediate structures are joined in a fixed connection to form the internal unit within the external housing.

The interior structure may, for example, be a mesh or net-like structure, or a highly porous material. Preferably, the interior structure has a thickness of 0.01 mm to 20 mm, and is, for example, 0.1 to 4 mm thick. The interior structure may be connected to the cover.

The two film layers are preferably identical in shape, and are specified in greater detail below.

Preferably, the edges of the film layers are connected by a welded connection, for example hot melting or, as an alternative, by an adhesive connection. An effective seal of the cover is thus achieved.

Preferably, the cover in this case has a flat outer edge, composed of two edges of the film layers bonded to one another, which extends over preferably ca. 0.2 to 2 cm from the outer circumference.

According to a first preference, both film layers of the base module are configured as a laminate of three layers, which are made of polyethylene terephthalate, aluminum and polypropylene, respectively, wherein the layer of polypropylene faces the inside of the cover. Such a base module can be used in the unit to perform the function of a heat exchanger.

In addition, polypropylene is suitable for melting under heat, so that it is readily possible to form a welded connection at the edges.

According to a second preference, both film layers are configured as a microporous material which is semipermeable, which material is preferably:
- permeable to water vapor, and impermeable to water as a liquid; or
- permeable to cations in solution and impermeable to anions in solution.

A film layer made of such microporous material is also known as an ion-selective membrane. A base module formed in this way can be used in the unit to perform the function of a filter, in particular for membrane distillation or membrane electrolysis. A membrane of Teflon film is used, for example, such as porous expanded PTFE, or graphene.

The film layers according to the above-mentioned first and second preferences preferably have a thickness of 10 to 500 microns. For example, a thickness in the region of 75 microns is selected for the heat exchanger, and a thickness in the region of 80 microns is selected for the filter.

According to the invention, the planar extensions of the base module extend within the same plane as the basic form of the base module. Preferably, the extensions are provided at the transverse sides of the basic form, wherein they extend, for example, in the longitudinal direction of the basic form.

Such extensions are particularly suitable for bringing the base module into a state in which it can be flowed through during performance of the method according to the second aspect of the invention, wherein the interior space is opened at specific positions at the location of the extensions.

For the sake of completeness, it should be noted that the edges which connect the two film layers extend over the entire periphery of the cover and thus also over the extensions, if present. The interior space of the entire planar cover is thus delimited by this edge.

Seen from the top, the planar basic form preferably has a rectangular shape.

It is particularly preferable according to the invention that in the base module the interior structure extends over virtually the entire interior space of the cover.

This means that, if extensions are present, there is also an interior structure present in the interior space of the extension.

The basic form of the planar cover may be either a square or an elongate rectangle, with the latter being preferred. The latter depends on the flow through the base module once it has been brought into a state in which it can be flowed through.

With respect to the above-described extensions of the base module, the following embodiments are particularly preferred:
Preferably, the extensions are configured to extend into the external entries when placed in the external housing.

Such an embodiment makes it simple to connect the external entries directly and effectively to opened extensions.

Preferably, the number of extensions at one side is greater than at the opposite side. Especially preferably, the base module contains two extensions at one side and a single extension at the other side. A greater number of extensions may also be used, provided that there is a difference in number between the two opposite sides.

When the base module is brought into a state in which it can be flowed through, such an embodiment offers good and effective flow through the entire interior space for the benefit of the function which the film layers have.

When the two sides are thus provided with a different number of extensions, these determine an orientation of the base module when the extensions are opened for through-flow. The inflow will take place via the extensions at the side having the smaller number of extensions, and the outflow via the greater number of extensions at the opposite side.

Preferably, the total width of the extensions at the side with the greater number of extensions is also greater than the total width of the extensions at the side with the smaller number of extensions.

As a result, the build-up of pressure when a fluid flows through the interior space is minimal.

Preferably, a first side is provided with a single extension, which preferably abuts the center line of the rectangular basic form.

Preferably, a second side is provided with two extensions, which preferably extend at a distance from the prolongation of the center line of the rectangular basic form.

A second aspect of the invention relates to a method for producing a unit through which a fluid can flow, having the function of a heat exchanger, a filter, or a combination of the two, according to claim 12. The method according to the invention comprises the steps of:
i) providing an external housing which can be assembled and is provided with external entries;
ii) arranging an internal unit through which a fluid can flow within the external housing;
wherein the internal unit is constructed by:
a) stacking a number of base modules as defined according to the first aspect of the invention inside the external housing in a partially assembled state, wherein a planar intermediate structure which can be flowed through is placed between at least one pair of adjacent base modules;
b) fully assembling the external housing;
c) joining the stacked base modules and intermediate structures in a fixed connection to form an internal unit within the assembled external housing;
d) opening the base modules at the location of external entries in order to form entries into the base modules as a result of which the interior spaces of the base modules can be flowed through via the external entries.

In the fully assembled state, the external housing is a box-like structure having a top side and a bottom side and longitudinal sides which are configured as closed surfaces, with the two transverse sides being provided with external entries.

The inside of the fully assembled housing is thus accessible only via these external entries. In the partially assembled state, a top side or a bottom side, for example, has not yet been mounted, so that the inside of the housing is also accessible from that side.

Placing the base modules and intermediate structures in the housing can be performed in a simple way by stacking, which can take place relatively smoothly and without errors. Here, it is advantageous if the base module and intermediate structure are preformed planar objects which are preferably adapted to the contours of the inside of the housing, and more preferably also to the contours of the external entries.

Depending on the direction in which fluid flows through the base modules, the entry in which an extension is present may function as an inlet for a fluid or as an outlet for a fluid.

According to the invention, at least one planar intermediate structure which can be flowed through is placed between each pair of adjacent base modules, for the purpose of good efficiency of an intended exchange between the two different flows.

By fully assembling the housing, a space is then created on the inside, which is only accessible via the external entries. This makes it possible to join the stacked base modules and intermediate structures within the external housing in such a way that the internal unit to be formed is secured within the housing by fitting into contours on the inside of the housing. This very greatly reduces the risk of leakage during later use of the unit.

The only measure needed to make the unit usable as a filter or heat exchanger is to finally open the base modules at the location of external entries so that they can be flowed through. As a result, it becomes possible for the interior spaces of the base modules to be flowed through, while the intermediate spaces filled with intermediate structures can already be flowed through. In general, when using the unit as a filter or heat exchanger, the flow in the internal unit through adjacent spaces which are separated by a film layer are counter to one another in order to achieve an optimum effect.

Further according to the invention, each intermediate structure has a rectangular basic form which is provided at opposite sides with extensions which are configured in such a way that, when they are placed, they extend through the external entries of the external housing.

These extensions preferably extend through all external entries. If the external entries are also arranged symmetrically at the two opposite transverse sides of the housing, such an intermediate structure can then be placed in two orientations, which simplifies construction.

In the method according to the invention, the base modules are configured with extensions, which extensions extend through external entries of the external housing, and which extensions are opened in step d).

As both the intermediate structure and the base module are provided with extensions, an improved joining of the stacked parts is possible.

The method thus makes it possible to form an internal unit in a relatively simple manner, with the risk of leakage during use of the unit being minimized.

It is preferable in the method according to the invention for each intermediate structure to be configured in such a way that its surface area largely overlaps with the surface area of the base modules. In other words, the surface area of the intermediate structure is to a large extent congruent with the surface area of the base module.

In the method according to the invention, it is preferred for step c) to be performed by:
applying a liquid resin over the longitudinal sides of the stacked base modules and intermediate structures, which is allowed to cure so that the longitudinal sides of the stacked base modules are embedded in a resin layer, preferably in such a way that only the edges of the base modules are embedded in a resin layer.

The resin may be either a thermoplastic or a thermoset, provided that the resin is suitable for sealingly bonding the different materials of the internal unit and the external housing. Examples of suitable liquid resins are a hot melt, an epoxy resin or a polyurethane resin.

It is advantageous if, in step c), the cured resin layer fits inside the contours on the inside of the external housing, in this case the inside of the longitudinal sides. This prevents slits between the internal unit and the inside of the housing, and ensures that the unit is properly secured within the housing.

Furthermore, it is particularly advantageous if, also in step c), the longitudinal sides of the intermediate structures become embedded in the resin layer. This improves the joining to form an internal unit.

It is advantageous in the method according to the invention if, in step d), the intermediate structures are also brought into an enclosed state at the location of the external inlet or outlet where the base modules are opened.

Particularly preferably, in the method according to the invention, step d) is performed by:
- filling external entries with a liquid resin, which is allowed to cure so that the ends of the extensions of the stacked base modules are embedded in a resin layer, wherein the edges and an adjoining part of the extensions in which an interior structure is present are embedded in the resin layer;
- removing an outer surface of the resin layer in such a manner that the outer part of the extensions in which an interior structure is present and which is embedded in the resin layer is removed.

In a special version of the method according to the invention, in step a), two different types of base modules are used, namely
- a base module having a filter function,
- a base module having a heat exchanger function,
wherein a stack is preferably obtained in which the two types alternate.

To this end, both types of base module are preferably configured according to the embodiments which have already been described above for these two different functions.

A bifunctional unit is thus obtained, in which two functions are combined, namely both a heat exchanger and a filter.

As explained above, the base module which is provided with extensions has an orientation which is related to the direction of flow: inflow takes place via the extensions at one side, outflow via the extensions at the opposite side.

In a stack of different base modules as indicated above, the stack is preferably configured in such a way that the base modules having a filter function have an orientation in one direction, while the base modules having a heat exchanger function have an orientation in the opposite direction.

It is particularly preferable, in the method according to the invention, for the external housing which can be assembled, in step i), to comprise external entries in which no extensions of the base modules can extend, which external entries are preferably provided at one or both transverse sides of the housing.

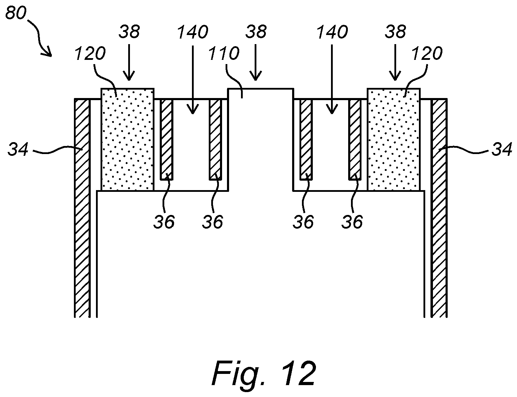

This is particularly advantageous in the case where two different base modules are stacked in two opposite orientations, such as in the bifunctional unit, which will be explained below with reference to figure 12.

As an alternative, it is preferred in the method according to the invention to perform the additional steps of:
iii) forming additional external passages in one or both longitudinal sides of the housing;
iv) forming an entry to the intermediate structures of the internal unit at the location of these external passages so that they can be flowed through from the external passages.

In step iv), no entry is formed to the interior spaces of the base modules, in other words they are not opened.

For example, steps iii and iv are performed in a continuous operation, for example removing material from the housing and from the internal unit by milling.

It thus becomes possible for the intermediate structures to be flowed through in a direction which is at right angles to the longitudinal direction of the internal unit. As a result, the external entries can be used solely for two main flows in countercurrent for the two different base modules:
- a flow of relatively hot fluid from a first transverse side through the base modules having the function of a heat exchanger;
- a flow of fluid to be filtered (which is relatively cold) from the opposite transverse side through the base modules having the function of a filter for membrane distillation.

As intermediate structures are provided between each pair of base modules, the distillate which leaves the base module for membrane distillation through the film layer will be collected in these intermediate structures and then discharged in a transverse direction via the external passages in the longitudinal sides of the external housing.

By means of the method according to the invention, a unit is produced through which a fluid can flow, having the function of a heat exchanger, a filter, or a combination of the two, comprising:
- an external housing provided with entries;
- an internal unit within the housing;
wherein the internal unit comprises a number of stacked base modules which, in the method, are brought into a state in which they can be flowed through.

To reinforce the construction of the unit, said unit which can be flowed through may be provided with rod-like connections between the top side and bottom side of the external housing (for example a nut and bolt connection) which extend through the internal unit, and for which purpose the intermediate structures and the base modules are provided with perforations. In this case, the perforations in the base modules are surrounded by sealing edges in order to maintain an enclosed interior space.

For example, these connections are located in the center line of the top and bottom side. Such a construction makes the unit more robust, with a view to the increased pressures which may arise inside the internal unit during its use.

According to a particular embodiment of the method according to the invention, the external housing comprises a top side and a bottom side, each of which is separately provided on the inside with an electrically conductive plate, by means of which a voltage field can be applied across the interior of the external housing.

The filter function for the purpose of membrane electrolysis can thus be enhanced, for example if the unit comprises base modules with ion-selective membranes.

Using means which are well known for this purpose, such as electric wires, an electric potential can be applied across the two plates placed opposite one another.

The invention will be discussed in further detail below with reference to the attached figures, which in combination with one another also show the method according to the invention.

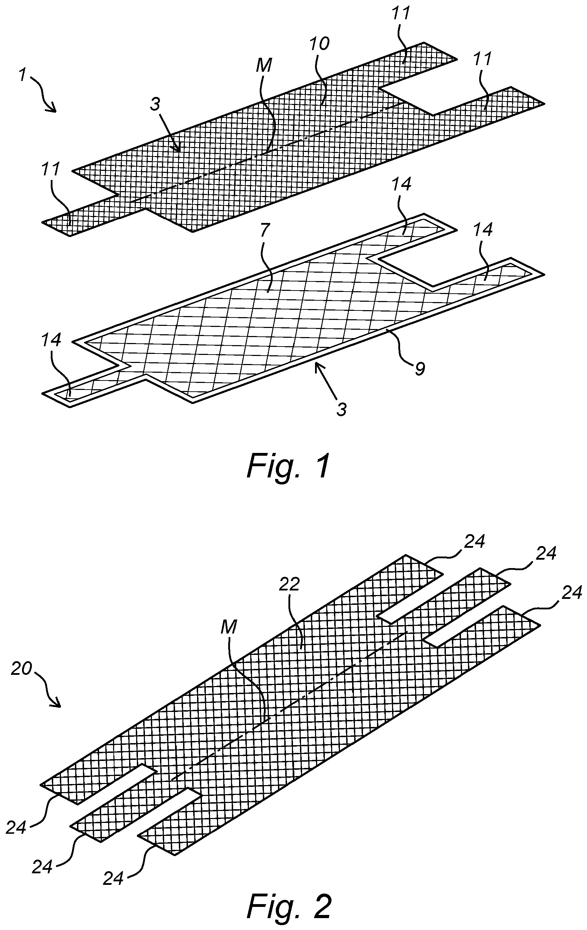

Figure 1 shows, in perspective, the structure of a base module 1, which can be referred to as a cover, consisting of a first film layer 3, a second film layer 3 and an interior structure 7. The film layers 3 are of corresponding dimensions and are shown separately from one another, although they must be connected to one another in order to form a cover. The interior structure is identical in shape to the two film layers, but is a fraction smaller, so that a surface remains free at the edge 9 of the film layer 3. This free surface is suitable for connection to the free surface of an opposite edge of the second film layer 3 when these are superposed and bonded together by melting or gluing to form a cover. The film layers have a rectangular basic form 10 provided with extensions 11 which extend at both transverse sides. One transverse side is provided with a single extension 11 which abuts the center line M of the rectangular basic form, while at the other transverse side two extensions 11 are provided which extend at a distance from the prolongation of the center line M of the rectangular basic form.

The intermediate structure 20 is a mesh-like material which can be flowed through, and is provided with extensions 14 of an identical shape to the film layers.

After the edges 9 of the film layers have been bonded, a cover 1 is obtained having an enclosed interior space in which a planar interior structure 7 which can be flowed through is arranged. In some cases, the interior structure may be secured in the cover.

Figure 2 shows, in perspective, an intermediate structure 20 which can be flowed through and is made of a mesh-like material having a rectangular basic form 22 provided with extensions 24 which extend at both transverse sides and parallel to the center line M.

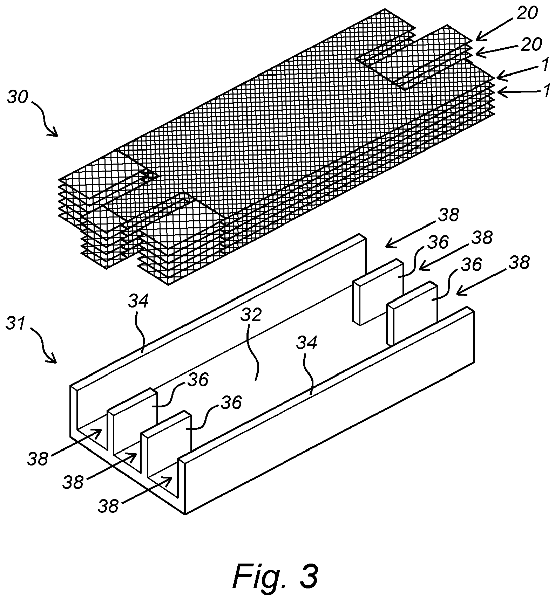

Figure 3 shows a stack 30 of alternating base modules 1 and intermediate structures 20, in which the rectangular basic forms have been placed one on top of the other so as to precisely overlap, and as a result the extensions, where present, also overlap. This stack 30 is suitable to be placed in the inside of a partially assembled external housing 30 comprising a flat bottom side 32 and two flat longitudinal sides 34. Two partitions 36 are arranged at both transverse sides, as a result of which three external entries 38 are provided at both transverse sides.

The extensions of the intermediate structure and the base module are configured in such a way that they extend within the contours of the external entries 38.

In this case, the base modules 1 are in an enclosed state, in other words the two film layers are connected at the edges around the entire periphery.

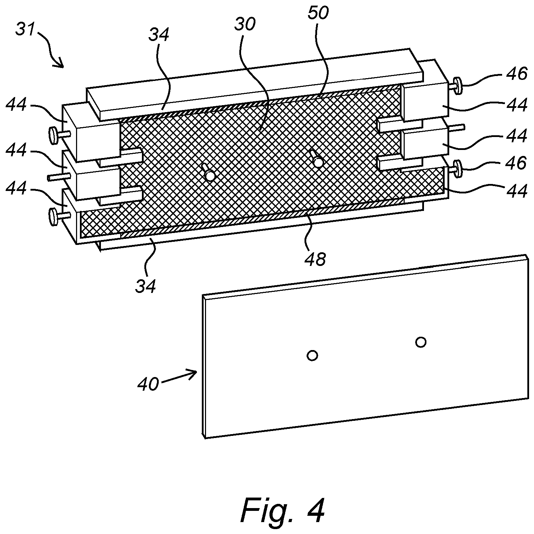

Figure 4 shows a cut-away view of a stack 30 in a partially assembled housing 31, from which the top side 40 has been removed. In reality, however, the top side 40 is mounted on the housing so that the external housing is fully assembled, as shown in the following figures. In this fully assembled state, step c) of joining the stack is performed in the following way:
Injection ports 44 are mounted on the external entries 38. The injection ports 44 close off the entries, and are each provided with an injection channel 46 through which a liquid resin can be inserted into the fully assembled external housing. When the housing is placed vertically on a longitudinal side 34 as illustrated, and liquid resin is injected via the two lower injection ports 44 at both transverse sides, the liquid resin will spread over the inside of the longitudinal side 34 and thus form a resin layer 48 of a certain thickness over this longitudinal side 34. After the resin layer 48 cures, the relevant longitudinal side of the stack 30 will be embedded in the resin layer 48, provided that it is of a sufficient thickness. This effectively results in the base modules and the intermediate structures being brought into a fixed connection with one another at the longitudinal sides.

A resin layer 50 is also applied at the opposite longitudinal side and is obtained by performing the process described above, with the external housing being arranged upside down with respect to the illustrated arrangement, namely resting on the other longitudinal side, and using the other two injection ports.

The base modules and intermediate structures of the loose stack 30 are thus joined and brought into a fixed connection, so that an internal unit is obtained within the assembled external housing.

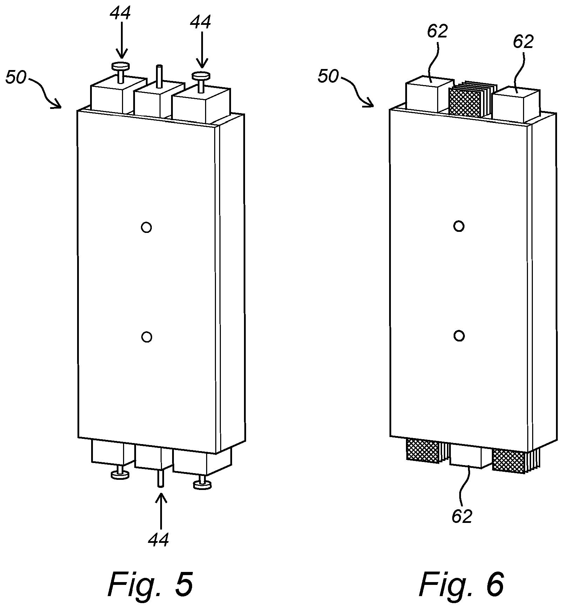

Figure 5 shows the fully assembled external housing 50 which is obtained after forming the internal unit by joining the stack 30 at the longitudinal sides, as shown in fig. 4.

The housing 50 is arranged vertically on a transverse side, in order to inject liquid resin via the central injection port 44 into the external inlet to which the injection port is connected. The resin will thus surround the extensions of the (still enclosed) base modules, while it flows into the intermediate structures. After the resin has cured, the extensions of the base modules will be embedded in resin, while the intermediate structure is completely filled with resin.

The relevant inlet is filled with such an amount of resin that the ends of the extensions of the stacked base modules are surrounded by resin in such a way that their edges and an adjoining part of the extensions in which an interior structure is present are surrounded by resin. After the resin has cured, this adjoining part of the extension is thus embedded in a resin layer. The intermediate extensions of the intermediate structures are sealed as a result of having been filled with resin.

The illustrated arrangement is then reversed in order to carry out the same process by injection via the two opposite outer injection ports 44.

The internal unit is thus also brought into a further fixed connection at the location of the relevant entries.

Figure 6 shows the end result of the steps described for fig. 5, after the resin has cured. Solid blocks of resin 62 protrude from the assembled housing 50, in which extensions 11 and 24 of the base modules 1 and intermediate structures 20, respectively, are embedded.

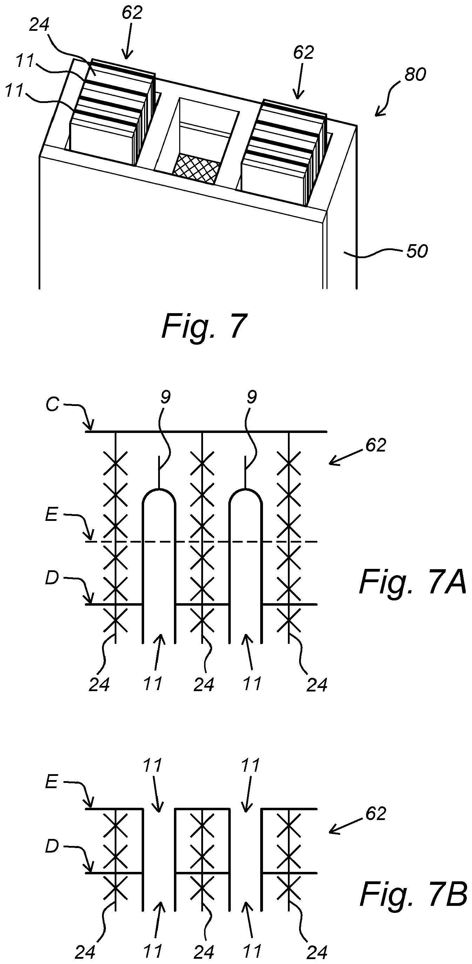

Figure 7 shows, at a transverse side of the external housing 50, the end result after performing step d) of the method according to the invention, wherein, of the two resin blocks 62 illustrated in fig. 6, the outer surface has been removed from the top in such a way that the outer part of the extensions of the base modules in which an interior structure is present and which is embedded in the resin layer is removed. This has the effect that the end of each extension 11 of each of the embedded base modules is opened by removing the edge 9 and the first adjoining part with an interior space.

At the same time, this removal does not affect the intermediate extensions 24 of the intermediate structures: these remain sealed as a result of being filled with resin.

At the opposite side, resin is removed from the outer surface of the single protruding resin block in the same way.

Figure 7A shows a cross section of two extensions 11 with edges 9 of a base module arranged between extensions 24 of intermediate structures. These extensions 11, 24 are embedded in a block of resin 62 which extends from an upper surface C to a depth D. The state in fig. 7A corresponds to the situation in fig. 6. Dashed line E indicates a depth up to which resin must be removed in order to reach the situation in fig. 7.

Figure 7B shows the same cross section as fig. 7A after the situation of fig. 7 has been reached, namely removal of the outer surface of the resin block 62. Here, the extensions of the base modules are thus opened, while the intermediate structures remain closed as a resin layer is present which extends from the level of E, which forms the new upper surface of the resin block 62, to the final depth D.

In the illustration of figs. 7 and 7B, the interior spaces of the base modules can thus be flowed through from the external entries, at the edges where the resin blocks 62 are present, from which the top has been partially removed.

Fig. 7 thus shows a unit 80, through which a fluid can flow, having the function of a heat exchanger, a filter, or a combination of the two, comprising
an external housing 50 provided with external entries for a fluid;
an internal unit 30, through which a fluid can flow, placed within the housing 50;
with the internal unit 30 comprising a number of stacked base modules 1 which, during the method of production, are brought into a state in which they can be flowed through.

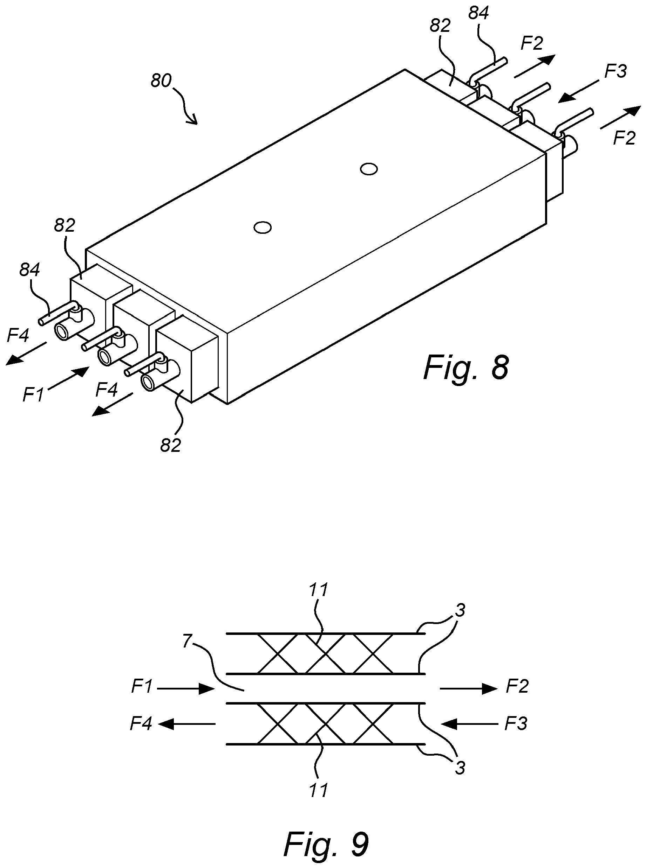

Figure 8 shows the unit 80 according to fig. 7, with manifolds 82 provided with taps 84 being connected to the entries.

At one transverse side of the unit 80, a single resin block is present in the center and is connected to a manifold 82 through which an incoming flow of fluid F1 is conducted. This flow F1 will flow through the interior structures of the opened base modules. This flow then leaves the unit 80 via the two outer manifolds 82 as flow F2.

In the opposite direction, a flow F3 is introduced via a central manifold 82 and flows through the intermediate structures of the internal unit. This manifold is connected to the central external inlet illustrated in fig. 7. From this inlet, only the intermediate structures can be flowed through, while the base modules are inaccessible. This flow F3 will thus only flow through the intermediate structures. This flow then leaves the unit 80 via the two outer manifolds 82 as flow F4.

Figure 9 diagrammatically shows a cross section in the longitudinal direction of part of the internal unit according to fig. 8, comprising three planar spaces which are separated by film layers 3. Here, a flow is conducted from F1 to F2 through a planar space which is filled with an interior structure 7 which is delimited by two film layers 3, while in adjacent planar spaces filled with intermediate structures 11 a counter flow is conducted from F3 to F4.

If the unit is configured as a heat exchanger, there is an incoming flow F1 which is relatively warm, and a counter incoming flow F3 which is relatively cold. Here, the film layers 3 are configured as a trilaminate of PET-aluminum-PP.

If the unit is configured as a filter for membrane distillation, there is an incoming flow F1 which is unfiltered, and a counter outgoing flow F4 of distillate from the flow F1. The outgoing flow F2 is a so-called residual flow, the residue which remains after membrane distillation. The incoming flow F3 may, for example, be a supply of hot air, optionally containing distilled water vapor obtained from a previous distillation step.

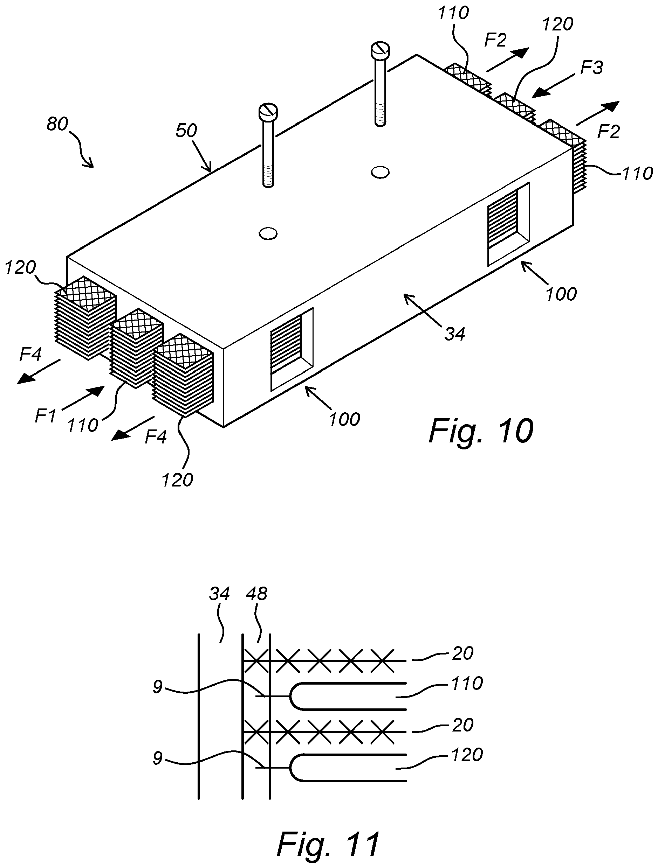

Figure 10 shows a unit 80 with a housing 50 in which base modules having a heat exchanger function 110 and having a filter function 120 are stacked in an alternating fashion. An intermediate structure is provided in each case between each pair of modules.

The base modules 110 and 120 have the same design with extensions as illustrated in fig. 1, namely a transverse side having two extensions and an opposite transverse side having one extension. Each intermediate structure has the same design as in fig. 2.

Moreover, the base modules 110 and 120, respectively, have different orientations in terms of the direction of transverse sides, so that the base modules 110 extend with two extensions at the right-hand side, while the base modules 120 extend with two extensions at the left-hand side.

As the base modules are flowed through from the transverse side having a single extension, it is thus possible to create a counterflow between the two different base modules. In this case, a relatively hot stream will flow in via F1 and flow out cool via two outlets to F2. The flow to be filtered flows in the opposite direction via F3 to the two outlets via F4.

For the sake of the visibility of the base modules, the resin blocks in which these base modules are embedded are not illustrated in fig. 10. It should be noted for the sake of completeness that the extensions of the base modules of fig. 10 are, however, accommodated in resin blocks as illustrated in fig. 7.

On the inside of the housing 50, the longitudinal sides of the internal unit are joined by a resin layer 48 and 50 which bears against the external longitudinal sides 34 of the housing, according to the same principle as discussed above.

Passages 100 are subsequently milled into the longitudinal sides, with the adjoining resin layer also being removed. Via these passages 100, part of the internal unit is made accessible, namely the spaces in which the intermediate structures of the internal unit are present.

The opposite longitudinal side of the housing is provided with passages 100 in the same way. The intermediate structures can thus be flowed through in a direction at right angles to the flows F1-F2 and F3-F4.

For example, this transverse stream transports away filtrate or distillate which is driven out of base modules having a filter function and is collected in the intermediate structures.

Fig. 10 illustrates pins which are inserted from the external top side through corresponding holes. At the bottom side, holes corresponding to those on the top side are provided. The pins are of such a length that they extend through the entire unit. The ends of the pins are provided with a screw thread. These ends are secured at the external bottom side by a nut. As a result, the structure of the unit is reinforced by rod-like connections between the top side and bottom side of the external housing.

For this specific embodiment, the intermediate structures and the base modules are likewise provided with corresponding perforations. Here, the perforations in the base modules are surrounded by sealing edges in order to maintain an enclosed interior space.

Figure 11 diagrammatically shows a cross section of part of the longitudinal side of unit 80 according to fig. 10. Against the inside of external longitudinal side 34 rests a cured resin layer 48 with, embedded therein, the longitudinal sides of the alternatingly stacked:
- base modules having a heat exchanger function 110;
- base modules having a filter function 120;
- intermediate structures 20, which lie between each pair of base modules.

Here, only the edges 9 of the base modules 110, 120 are embedded in the resin layer. The entirety is thus brought into a fixed connection to form an internal unit.

In order to create the external passages 100 according to fig. 10, the external longitudinal side 34 is milled away, together with the adjoining resin layer 48. The end result of this is that the space in which the intermediate structures 20 are present have been made accessible. As only an outer part of the edges 9 of the base modules 110, 120 which was embedded in the resin layer has been removed, an inner part of the edge the seal of the cover is still intact. From the passage 100, therefore, only the intermediate structures can be flowed through, while the base modules remain enclosed.

Fig. 12 shows, in cross section, a transverse side of the unit 80, which is a variant of the embodiment in fig. 10. In accordance with fig. 10, it is a unit 80 with an external housing in which base modules having a heat exchanger function 110, and having a filter function 120, are stacked in an alternating fashion. An intermediate structure is provided in each case between each pair of modules. The external housing comprises two longitudinal sides 34.

In deviation from fig. 10, the transverse side is provided with four partitions 36, which also applies to the opposite transverse side (not illustrated).

There are thus five entries provided at both transverse sides. In three entries 38, the extensions of the base modules 110 and 120 extend. In two entries, indicated by 140, the extensions do not extend.

Via these entries 140, therefore, only the intermediate structures can be flowed through, because the base modules are in an enclosed state at the location of these entries. The base modules can be flowed through only along the other three entries in which the extensions extend, specifically once these extensions have been embedded in resin and are opened at the end, as illustrated in fig. 7 and 7B.

The embodiment of fig. 12 thus enables the intermediate structures to be flowed through from the transverse sides, without the need to create passages 100 in the longitudinal sides in a separate step.

## Claims

1. Unit (80) through which a fluid can flow, having the function of a heat exchanger, a filter, or a combination of the two, comprising:
- an external housing (50) provided with external entries (38) for a fluid;
- an internal unit (30) through which a fluid can flow and which is placed within the housing (50);
wherein the internal unit (30) comprises a number of stacked base modules (1)
which can be flowed through, wherein each base module is planar and comprises:
- a planar cover composed of two superposed film layers (3) which are connected to one another at the edges (9), so that these edges (9) delimit an enclosed interior space,
- a planar interior structure (7) which can be flowed through and is arranged in the enclosed interior space of the cover;
and wherein the planar cover is configured as a planar basic form (10), which is provided with planar extensions (11) extending from the basic form, wherein the extensions (11) are provided at opposite sides of the basic form (10), and the interior space extends into the extensions (11),
wherein the extensions (11) of the stacked base modules (1) extend through external entries (38) of the external housing (50), and wherein the extensions (11) have an opened status, in order to form entries into the base modules (1) as a result of which the interior spaces of the base modules can be flowed through via the external entries (38),
wherein a planar intermediate structure (20) which can be flowed through is placed between at least one pair of adjacent base modules (1),
and wherein the stacked base modules (1) and intermediate structures (20) are joined in a fixed connection to form the internal unit (30) within the external housing (50).

2. Unit (80) according to claim 1, wherein each intermediate structure (20) has a rectangular basic form which is provided at opposite sides with extensions (24) which are configured in such a way that, when they are placed, they extend through external entries (38) of the external housing (50).

3. Unit (80) according to claim 2, wherein each intermediate structure (20) has an enclosed status at the location of the external entries (38) where the base modules (1) have an opened status.

4. Unit (80) as claimed in one of the preceding claims, wherein the interior structure (7) of the base module (1) extends over virtually the entire interior space of the cover.

5. Unit (80) as claimed in one of the preceding claims, wherein the extensions (11) of the base module (1) are configured to extend into the external entries (38) when placed in the external housing (31).

6. Unit (80) as claimed in one of the preceding claims, wherein the number of extensions (11) of the base module (1) at one side is greater than at the opposite side.

7. Unit (80) as claimed in claim 6, wherein the total width of the extensions (11) of the base module (1) at the side with the greater number of extensions is also greater than the total width of the extensions (11) at the side with the smaller number of extensions.

8. Unit (80) as claimed in one of the preceding claims, wherein a first side of the base module (1) is provided with a single extension (11), which preferably abuts the center line (M) of a rectangular basic form (10).

9. Unit (80) as claimed in claim 8, wherein a second side of the base module (1) is provided with two extensions (11), which preferably extend at a distance from the prolongation of the center line (M) of the rectangular basic form (10).

10. Unit (80) as claimed in one of the preceding claims, wherein the edges (9) of the base module (1) are connected by a welded connection, for example hot melting or, as an alternative, by an adhesive connection.

11. Unit (80) as claimed in one of the preceding claims, wherein
either both film layers (3) of the base module (1) are configured as a laminate composed of three layers, which are made of polyethylene terephthalate, aluminum and polypropylene, respectively, wherein the layer of polypropylene faces the inside of the cover,
or wherein both film layers (3) of the base module (1) are configured as a microporous material which is semipermeable, which material is preferably:
- permeable to water vapor, and impermeable to water as a liquid; or
- permeable to cations in solution and impermeable to anions in solution.

12. A method for producing a unit (80) through which a fluid can flow, having the function of a heat exchanger, a filter, or a combination of the two, comprising the steps of:
i) providing an external housing (50) which can be assembled and is provided with external entries (38);
ii) arranging an internal unit (30) through which a fluid can flow within the external housing (50);
wherein the internal unit (30) comprises a number of base modules (1) of which each base module (1) is planar, and comprises:
- a planar cover composed of two superposed film layers (3) which are connected to one another at the edges (9), so that these edges (9) delimit an enclosed interior space,
- a planar interior structure (7) which can be flowed through and is arranged in the enclosed interior space of the cover;
wherein the planar cover is configured as a planar basic form (10), which is provided with planar extensions (11) extending from the basic form, wherein the extensions (11) are provided at opposite sides of the basic form (10), and the interior space extends into the extensions (11),
and wherein the internal unit (30) is constructed by:
a) stacking a number of the base modules (1) inside the external housing in a partially assembled state (31), wherein a planar intermediate structure (20) which can be flowed through is placed between at least one pair of adjacent base modules (1);
b) fully assembling the external housing (50);
c) joining the stacked base modules (1) and intermediate structures (20) in a fixed connection to form an internal unit (30) within the assembled external housing (50);
d) opening the base modules (1) at the location of external entries (38) in order to form entries into the base modules (1) as a result of which the interior spaces of the base modules can be flowed through via the external entries (38),
and wherein each intermediate structure (20) has a rectangular basic form which is provided at opposite sides with extensions (24) which are configured in such a way that, when they are placed, they extend through external entries (38) of the external housing (50),
and wherein the extensions (11) extend through external entries (38) of the external housing (50), and the extensions (11) are opened in step d).

13. The method as claimed in claim 12, wherein each intermediate structure (20) is configured in such a way that its surface area largely overlaps with the surface area of the base modules (1).

14. The method as claimed in one of the preceding claims 12 or 13, wherein step c) is performed by:
applying a liquid resin over the longitudinal sides of the stacked base modules (1) and intermediate structures (20), which is allowed to cure so that the longitudinal sides of the stacked base modules (1) are embedded in a resin layer (48), preferably in such a way that only the edges (9) of the base modules (1) are embedded in a resin layer (48).

15. The method as claimed in one of the preceding claims 12-14, wherein, in step d), the intermediate structures (20) are also brought into an enclosed state at the location of the external entries (38) where the base modules (1) are opened.

16. The method as claimed in one of the preceding claims 12-15, wherein step d) is performed by:
- filling the external entries (38) in which the extensions (11) of the stacked base modules (1) extend with a liquid resin, which is allowed to cure so that the ends of the extensions (11) of the stacked base modules (1) are embedded in a resin layer (62), wherein the edges (9) and an adjoining part of the extensions (11) in which an interior structure (7) is present are embedded in the resin layer (62);
- removing an outer surface of the resin layer (62) in such a manner that the outer part of the extensions (11) of the base modules (1) in which an interior structure (7) is present and which is embedded in the resin layer (62) is removed.

## Patentansprüche

1. Einheit (80), durch die ein Fluid fließen kann und die die Funktion eines Wärmetauschers, eines Filters oder einer Kombination von beiden aufweist, wobei die Einheit Folgendes umfasst:
- ein externes Gehäuse (50), das mit externen Eingängen (38) für ein Fluid versehen ist;
- eine interne Einheit (30), durch die ein Fluid fließen kann und die innerhalb des Gehäuses (50) angeordnet ist;
wobei die interne Einheit (30) eine Zahl von gestapelten Basismodulen (1) umfasst, die durchflossen werden können, wobei jedes Basismodul eben ist und Folgendes umfasst:
- eine ebene Abdeckung, die aus zwei übereinanderliegenden Folienschichten (3) zusammengesetzt ist, die an den Kanten (9) derart miteinander verbunden sind, dass diese Kanten (9) einen geschlossenen Innenraum begrenzen,
- eine ebene Innenstruktur (7), die durchflossen werden kann und in dem geschlossenen Innenraum der Abdeckung angeordnet ist;
und wobei die ebene Abdeckung als eine ebene Basisform (10) konfiguriert ist, die mit ebenen Erweiterungen (11) versehen ist, die sich von der Grundform erstrecken, wobei die Erweiterungen (11) an gegenüberliegenden Seiten der Grundform (10) vorgesehen sind und der Innenraum sich in die Erweiterungen (11) erstreckt,
wobei sich die Erweiterungen (11) der gestapelten Basismodule (1) durch externe Eingänge (38) des externen Gehäuses (50) erstrecken und wobei die Erweiterungen (11) einen offenen Zustand aufweisen, um Eingänge zu den Basismodulen (1) zu bilden, wodurch die Innenräume der Basismodule durch die externen Eingänge (38) durchströmt werden können,
wobei eine ebene Zwischenstruktur (20), die durchströmt werden kann, zwischen mindestens einem Paar von benachbarten Basismodulen (1) angeordnet ist und wobei die gestapelten Basismodule (1) und Zwischenstrukturen (20) in einer festen Verbindung verbunden sind, um die interne Einheit (30) in dem externen Gehäuse (50) zu bilden.

2. Einheit (80) nach Anspruch 1, wobei jede Zwischenstruktur (20) eine rechteckige Grundform aufweist, die an gegenüberliegenden Seiten mit Erweiterungen (24) versehen ist, die derart konfiguriert sind, dass sie sich dann, wenn sie angeordnet sind, durch externe Eingänge (38) des externen Gehäuses (50) erstrecken.

3. Einheit (80) nach Anspruch 2, wobei jede Zwischenstruktur (20) an dem Ort der externen Eingänge (38), an dem die Basismodule (1) einen offenen Zustand aufweisen, einen geschlossenen Zustand aufweist.

4. Einheit (80) nach einem der vorhergehenden Ansprüche, wobei sich die Innenstruktur (7) des Basismoduls (1) nahezu über den gesamten Innenraum der Abdeckung erstreckt.

5. Einheit (80) nach einem der vorhergehenden Ansprüche, wobei die Erweiterungen (11) des Basismoduls (1) konfiguriert sind, sich in die externen Eingänge (38) zu erstrecken, wenn sie in dem externen Gehäuse (31) angeordnet sind.

6. Einheit (80) nach einem der vorhergehenden Ansprüche, wobei die Zahl der Erweiterungen (11) des Basismoduls (1) an einer Seite größer als an der gegenüberliegenden Seite ist.

7. Einheit (80) nach Anspruch 6, wobei die Gesamtbreite der Erweiterungen (11) des Basismoduls (1) an der Seite mit der größeren Zahl von Erweiterungen auch größer als die Gesamtbreite der Erweiterungen (11) an der Seite mit der kleineren Zahl von Erweiterungen ist.

8. Einheit (80) nach einem der vorhergehenden Ansprüche, wobei an einer ersten Seite des Basismoduls (1) eine einzelne Erweiterung (11) bereitgestellt ist, die vorzugsweise an die Mittellinie (M) einer rechteckigen Grundform (10) angrenzt.

9. Einheit (80) nach Anspruch 8, wobei an einer zweiten Seite des Basismoduls (1) zwei Erweiterungen (11) bereitgestellt sind, die sich vorzugsweise in einem Abstand von der Verlängerung der Mittellinie (M) der rechteckigen Basisform (10) erstrecken.

10. Einheit (80) nach einem der vorhergehenden Ansprüche, wobei die Kanten (9) des Basismoduls (1) durch eine geschweißte Verbindung, beispielsweise Heißschmelzen, oder alternativ durch eine Klebeverbindung verbunden sind.

11. Einheit (80) nach einem der vorhergehenden Ansprüche, wobei entweder beide Folienschichten (3) des Basismoduls (1) als ein Schichtstoff konfiguriert sind, der aus drei Schichten zusammengesetzt ist, die aus Polyethylenterephtalat, Aluminium bzw. Polypropylen hergestellt sind, wobei die Schicht aus Polypropylen der Innenseite der Abdeckung zugewandt ist, oder wobei beide Folienschichten (3) des Basismoduls (1) als ein mikroporöses Material konfiguriert sind, das semipermeabel ist, wobei das Material vorzugsweise:
- permeabel für Wasserdampf und impermeabel für flüssiges Wasser ist; oder
- permeabel für Kationen in Lösung und impermeabel für Anionen in Lösung ist.

12. Verfahren zum Herstellen einer Einheit (80), durch die ein Fluid strömen kann, die die Funktion eines Wärmetauschers, eines Filters oder einer Kombination von den beiden aufweist, wobei das Verfahren die folgenden Schritte umfasst:
i) Bereitstellen eines externen Gehäuses (50), das zusammengebaut werden kann und mit externen Eingängen (38) versehen ist;
ii) Anordnen einer internen Einheit (30), durch die ein Fluid in dem externen Gehäuse (50) strömen kann;
wobei die interne Einheit (30) eine Zahl von Basismodulen (1) umfasst, wovon jedes eben ist und Folgendes umfasst:
- eine ebene Abdeckung, die aus zwei übereinanderliegenden Folienschichten (3) zusammengesetzt ist, die an den Kanten (9) derart miteinander verbunden sind, dass diese Kanten (9) einen geschlossenen Innenraum begrenzen,
- eine ebene Innenstruktur (7), die durchströmt werden kann und in dem geschlossenen Innenraum der Abdeckung angeordnet ist;
wobei die ebene Abdeckung als eine ebene Basisform (10) konfiguriert ist, für die ebene Erweiterungen (11) bereitgestellt sind, die sich von der Grundform erstrecken, wobei die Erweiterungen (11) an gegenüberliegenden Seiten der Grundform (10) bereitgestellt sind und der Innenraum sich in die Erweiterungen (11) erstreckt,
und wobei die interne Einheit (30) zusammengefügt wird durch:
a) Stapeln einer Zahl der Basismodule (1) in dem externen Gehäuse in einem teilweise zusammengebauten Zustand (31), wobei eine ebene Zwischenstruktur (20), die durchströmt werden kann, zwischen mindestens einem Paar von benachbarten Basismodulen (1) angeordnet wird;
b) vollständiges Zusammenbauen des externen Gehäuses (50);
c) Verbinden der gestapelten Basismodule (1) und Zwischenstrukturen (20) in einer festen Verbindung, um eine interne Einheit (30) in dem zusammengebauten externen Gehäuse (50) zu bilden;
d) Öffnen der Basismodule (1) an dem Ort der externen Eingänge (38), um Eingänge in die Basismodule (1) zu bilden, wodurch die Innenräume der Basismodule durch die externen Eingänge (38) durchströmt werden können,
und wobei jede Zwischenstruktur (20) eine rechteckige Grundform aufweist, die an gegenüberliegenden Seiten mit Erweiterungen (24) versehen ist, die derart konfiguriert sind, dass sie sich dann, wenn sie angeordnet sind, durch externe Eingänge (38) des externen Gehäuses (50) erstrecken,
und wobei sich die Erweiterungen (11) durch externe Eingänge (38) des externen Gehäuses (50) erstrecken und die Erweiterungen (11) in Schritt d) geöffnet werden.

13. Verfahren nach Anspruch 12, wobei jede Zwischenstruktur (20) derart konfiguriert ist, dass ihre Oberfläche größtenteils mit der Oberfläche der Basismodule (1) überlappt.

14. Verfahren nach einem der vorhergehenden Ansprüche 12 oder 13, wobei Schritt c) durchgeführt wird durch:
Aufbringen eines flüssigen Harzes auf die Längsseiten der gestapelten Basismodule (1) und Zwischenstrukturen (20), das derart aushärten kann, dass die Längsseiten der gestapelten Basismodule (1) in eine Harzschicht (48) eingebettet werden, vorzugsweise derart, dass nur die Kanten (9) der Basismodule (1) in eine Harzschicht (48) eingebettet werden.

15. Verfahren nach einem der vorhergehenden Ansprüche 12 14, wobei in Schritt d) die Zwischenstrukturen (20) auch an dem Ort der externen Eingänge (38), an dem die Basismodule (1) geöffnet werden, in einen geschlossenen Zustand gebracht werden.

16. Verfahren nach einem der vorhergehenden Ansprüche 12 15, wobei Schritt d) durchgeführt wird durch:
- Befüllen der externen Eingänge (38), in die sich die Erweiterungen (11) der gestapelten Basismodule (1) erstrecken, mit einem flüssigen Harz, das derart aushärten kann, dass die Enden der Erweiterungen (11) der gestapelten Basismodule (1) in eine Harzschicht (62) eingebettet werden, wobei die Kanten (9) und ein angrenzender Teil der Erweiterungen (11), in dem eine innere Struktur (7) vorhanden ist, in die Harzschicht (62) eingebettet werden;
- Entfernen einer äußeren Oberfläche der Harzschicht (62) derart, dass der äußere Teil der Erweiterungen (11) der Basismodule (1), in dem eine innere Struktur (7) vorhanden ist und der in die Harzschicht (62) eingebettet ist, entfernt wird.

## Revendications

1. Unité (80) à travers laquelle un fluide peut s'écouler, ayant la fonction d'un échangeur de chaleur, d'un filtre ou d'une combinaison des deux, comprenant :
- un boîtier externe (50) pourvu d'entrées externes (38) pour un fluide ;
- une unité interne (30) à travers laquelle un fluide peut s'écouler et qui est placée à l'intérieur du boîtier (50) ;
l'unité interne (30) comportant un certain nombre de modules de base empilés (1) à travers lesquels un écoulement est possible, chaque module de base étant plan et comprenant :
□ un couvercle plan composé de deux couches de film superposées (3) qui sont raccordées l'une à l'autre aux bords (9), de sorte que ces bords (9) délimitent un espace intérieur clos,
□ une structure intérieure plane (7) à travers laquelle un écoulement est possible et disposée dans l'espace intérieur clos du couvercle ;
et dans lequel le couvercle plan est configuré comme une forme de base plane (10), qui est pourvue de prolongements plans (11) s'étendant depuis la forme de base, ces prolongements (11) étant prévus sur des côtés opposés de la forme de base (10), et l'espace intérieur s'étendant dans les prolongements (11),
les prolongements (11) des modules de base empilés (1) s'étendant à travers des entrées externes (38) du boîtier externe (50), et les prolongements (11) ayant un état ouvert, afin de former des entrées dans les modules de base (1), ce qui rend un écoulement possible à travers les espaces internes des modules de base via les entrées externes (38),
une structure intermédiaire plane (20) à travers laquelle un écoulement est possible étant placée entre au moins une paire de modules de base adjacents (1),
et les modules de base empilés (1) et des structures intermédiaires (20) étant joints dans une liaison fixe afin de former l'unité interne (30) à l'intérieur du boîtier externe (50).

2. Unité (80) selon la revendication 1, dans laquelle chaque structure intermédiaire (20) a une forme de base rectangulaire qui est pourvue, sur des côtés opposés, de prolongements (24) qui sont configurés de façon à ce que, lorsqu'ils sont placés, ils s'étendent à travers des entrées externes (38) du boîtier externe (50).

3. Unité (80) selon la revendication 2, dans laquelle chaque structure intermédiaire (20) a un état clos à l'emplacement des entrées externes (38) où les modules de base (1) ont un état ouvert.

4. Unité (80) selon l'une quelconque des revendications précédentes, dans laquelle la structure intérieure (7) du module de base (1) s'étend sur virtuellement tout l'espace intérieur du couvercle.

5. Unité (80) selon l'une quelconque des revendications précédentes, dans laquelle les prolongements (11) du module de base (1) sont configurés de façon à s'étendre dans les entrées externes (38) lorsqu'ils sont placés dans le boîtier externe (31).

6. Unité (80) selon l'une quelconque des revendications précédentes, dans laquelle le nombre de prolongements (11) du module de base (1) sur un côté est plus grand que sur le côté opposé.

7. Unité (80) selon la revendication 6, dans laquelle la largeur totale des prolongements (11) du module de base (1) sur le côté avec le plus grand nombre de prolongements est aussi plus grande que la largeur totale des prolongements (11) sur le côté avec le plus petit nombre de prolongements.

8. Unité (80) selon l'une quelconque des revendications précédentes, dans laquelle un premier côté du module de base (1) est pourvu d'un seul prolongement (11), qui est de préférence contigu à l'axe (M) d'une forme de base rectangulaire (10).

9. Unité (80) selon la revendication 8, dans laquelle un deuxième côté du module de base (1) est pourvu de deux prolongements (11), qui s'étendent de préférence à une distance de la prolongation de l'axe (M) de la forme de base rectangulaire (10).

10. Unité (80) selon l'une quelconque des revendications précédentes, dans laquelle les bords (9) du module de base (1) sont raccordés par une liaison soudée, par exemple déposée à chaud, ou, en variante, par une liaison adhésive.

11. Unité (80) selon l'une quelconque des revendications précédentes, dans laquelle
soit les deux couches de film (3) du module de base (1) sont configurées comme un stratifié composé de trois couches, qui sont faites de polyéthylène téréphtalate, d'aluminium et de polypropylène respectivement, la couche de polypropylène faisant face à l'intérieur du couvercle,
soit les deux couches de film (3) du module de base (1) sont configurées comme un matériau microporeux qui est semi-perméable, lequel matériau étant de préférence :
- perméable à la vapeur d'eau, et imperméable à l'eau comme liquide ; ou
- perméable à des cations en solution et imperméable à des anions en solution.

12. Procédé pour produire une unité (80) à travers laquelle un fluide peut s'écouler, ayant la fonction d'un échangeur de chaleur, d'un filtre ou d'une combinaison des deux, comprenant :
i) la prévision d'un boîtier externe (50) qui peut être assemblé et qui est pourvu d'entrées externes (38) ;
ii) la disposition d'une unité interne (30) à travers laquelle un fluide peut s'écouler à l'intérieur du boîtier externe (50) ;
cette unité interne (30) comportant un certain nombre de modules de base (1), chaque module de base (1) étant plan et comprenant :
- un couvercle plan composé de deux couches de film superposées (3) qui sont raccordées l'une à l'autre aux bords (9), de sorte que ces bords (9) délimitent un espace intérieur clos,
- une structure intérieure plane (7) à travers laquelle un écoulement est possible et disposée dans l'espace intérieur clos du couvercle ;
le couvercle plan étant configuré comme une forme de base plane (10), qui est pourvue de prolongements plans (11) s'étendant depuis la forme de base, ces prolongements (11) étant prévus sur des côtés opposés de la forme de base (10), et l'espace intérieur s'étendant dans les prolongements (11),
et l'unité interne (30) étant construite de la manière suivante :
a) en empilant un certain nombre des modules de base (1) à l'intérieur du boîtier externe dans un état partiellement assemblé (31), une structure intermédiaire plane (20) à travers laquelle un écoulement est possible étant placée ente au moins une paire de modules de base adjacents (1) ;
b) en assemblant complètement le boîtier externe (50) ;
c) en joignant les modules de base empilés (1) et des structures intermédiaires (20) dans une liaison fixe afin de former un unité interne (30) à l'intérieur du boîtier externe assemblé (50) ;
d) en ouvrant les modules de base (1) à l'emplacement d'entrées externes (38) afin de former des entrées dans les modules de base (1), ce qui rend un écoulement possible à travers les espaces intérieurs des modules de base via les entrées externes (38),
et dans lequel chaque structure intermédiaire (20) a une forme de base rectangulaire qui est pourvue, sur des côtés opposés, de prolongements (24) qui sont configurés de façon à ce que, lorsqu'ils sont placés, ils s'étendent à travers des entrées externes (38) du boîtier externe (50),
et dans lequel les prolongements (11) s'étendent à travers des entrées externes (38) du boîtier externe (50), et les prolongements (11) sont ouverts lors de l'étape d).

13. Procédé selon la revendication 12, dans lequel chaque structure intermédiaire (20) est configurée de façon à ce que sa surface active chevauche en grande partie la surface active des modules de base (1).

14. Procédé selon l'une quelconque des revendications 12 ou 13, dans lequel l'étape c) est exécutée de la manière suivante :
en appliquant une résine liquide au-dessus des côtés longitudinaux des modules de base empilés (1) et des structures intermédiaires (20), résine qu'on laisse durcir de manière à ce que les côtés longitudinaux des modules de base empilés (1) soient encastrés dans une couche de résine (48), de préférence de manière à ce que seuls les bords (9) des modules de base (1) soient encastrés dans une couche de résine (48).

15. Procédé selon l'une quelconque des revendications 12 à 14, dans lequel, lors de l'étape d), les structures intermédiaires (20) sont aussi mises dans un état clos à l'emplacement des entrées externes (38) où les modules de base (1) sont ouverts.

16. Procédé selon l'une quelconque des revendications 12 ou 15, dans lequel l'étape d) est exécutée de la manière suivante :
- en remplissant les entrées externes (38) dans lesquelles les prolongements (11) des modules de base empilés (1) s'étendent avec une résine liquide, qu'on laisse durcir de manière à ce que les extrémités des prolongements (11) des modules de base empilés (1) soient encastrées dans une couche de résine (62), les bords (9) et une partie adjacente des prolongements (11) dans lesquels une structure intérieure (7) est présente étant encastrés dans la couche de résine (62) ;
- en enlevant une surface extérieure de la couche de résine (62) de manière à ce que la partie externe des prolongements (11) des modules de base (1) dans lesquels une structure intérieure (7) est présente et qui est encastrée dans la couche de résine (62) soit enlevée.
